# EUROPEAN PATENT APPLICATION

(11) **EP 1 947 424 A2**
(43) Date of publication of application: **23.07.2008**
(21) Application number: 07024124.5
(22) Date of filing: 12.12.2007
(51) Int. Cl.: G01D 9/02, G01P 15/08, G01P 15/18, G11B 19/04

(54) **Dual acceleration sensor system**

(30) Priority: 22.01.2007 JP 2007011475
(71) Applicant: HITACHI METALS, LTD., Minato-ku, Tokyo 105-8614 (JP)
(72) Inventor: Noda, Masaru, Mohka 321-4346 (JP); Sugimoto, Masakazu, Mohka 321-4346 (JP)
(74) Representative: Beetz & Partner

(57) **Abstract**

The present invention relates to a dual acceleration sensor system usable for detecting impact, when strong impact works on a mobile device, and recording a history of applied impact, and workable with a low power consumption. It contains low range and high range acceleration sensors (1, 2), a signal processing circuit (4), and/or an operation mode controller (5) for switching signal between the two sensors and an operation mode of the signal processing circuit (4). The operation mode controller (5) switches between a low range mode in which a signal from the low range acceleration sensor (1) is processed at a low range operation rate and a high range mode in which a signal from the high range acceleration sensor (2) is processed at a high range operation rate. It is judged whether data processed in the low range mode exceeds a first threshold or not, and if not, the low range mode continues, while the mode switches to the high range mode if it does. In the high range mode, when a state that the data is less than a second threshold continues for a predetermined period of time, the mode returns to the low range mode, and if not, the high range mode remains.

## Description

### BACKGROUND OF THE INVENTION

### 1. Field of the Invention

The present invention relates to a dual acceleration sensor system usable for an application for detecting an impact, when a strong impact works on a mobile or portable electronic device or the like, and recording a history of applied impacts.

### 2. Description of the Related Art

A mobile or portable electronic device is susceptible to vibration or impact during use or while carrying by nature. In an extreme case, the device may be accidentally dropped. A device with a built-in magnetic disk such as a notebook computer or some of the digital video cameras is especially vulnerable to impact and needs protective measures against vibration or impact. Such protective measures are described in Japanese Patent Laid-Open Nos. 2000-241442, 2003-59222, and 2004-146036. A technique is described in Japanese Patent Laid-Open No. 2000-241442 for detecting a fall to retract the magnetic head to a safety area before crashing. This technique contains a three-axis acceleration sensor and judges that the magnetic disk device is freely falling when the acceleration signals of all three axes become small accelerations of substantially zero and when this state has continued for a predetermined time, and then moves the magnetic head to the safety area, thereby preventing breakage of the magnetic disk caused by an impact of crashing.

A technique is described in Japanese Patent Laid-Open No. 2003-59222 for retracting a magnetic head to a safety area when detecting a strong impact in anticipation of the subsequent impact. This technique contains a vibration detection sensor and a vibration judgment means for judging whether or not the vibration level outputted by the vibration detection sensor is in a high level that exceeds the reference level. When the vibration is in the high level, the head is retracted from the data storage area of a recording medium to the non-storage area to protect the data storage area from damage. Japanese Patent Laid-Open No. 2004-146036 describes a technique for detecting a shake in posture of the notebook computer to retract a magnetic head to a safety area.

However, the above protective measures are not thorough, and in some cases a big impact may result in a damage that requires repair, and in other cases, repeated small impacts may lead to damage. For most of the products, free repair guarantees are provided in which the manufacturers repair without charge the damage occurred within a certain period after purchase. In many of these cases, exemption clauses such as "damage due to incorrect use" are stipulated. Although regarding the damage caused by a fall or a big impact as "damage due to incorrect use" is appropriate, when there is no conspicuous damage to the appearance of the housing and so forth of a device, it is difficult to judge if the damage is caused by a fall or an impact. To respond to such a problem, a technique is described in Japanese Patent Laid-Open No. 2005-241503 that contains a three-axis acceleration sensor for outputting high sensitivity detection output and low sensitivity detection output, a fall judgment means for judging a fall based on the high sensitivity detection output of the acceleration sensor, and a non-volatile semiconductor memory. When the fall judgment means judges that the device is falling, the low sensitivity detection data of the acceleration sensor is recorded in the non-volatile semiconductor memory for a short time, the contents recorded in the non-volatile semiconductor memory is post-analyzed, and whether or not the mobile device has fell and crashed is judged.

For the purpose of recording a history of an impact, recording of not just one impact, but thorough recording of impacts that may occur at random from time to time is desired. In a system that switches the high sensitivity detection unit and the low sensitivity detection unit for signal processing, appropriate switching of the detection units is especially important. In this regard, the technique in Japanese Patent Laid-Open No. 2005-241503 described above is not adequate. In general, change in acceleration at the time of impact is acute, and although the vibration waveform is not constant because the vibration waveform depends on the hardness of the crashing object, the posture at the time of impact, or the like, the vibration waveform is often a tailing vibration waveform with a cycle of around 1 ms. To correctly acquire the impact vibration waveform with a cycle of around 1 ms, the measurement frequency interval must be about 0.1 ms or less. This waveform is an exceptionally high-speed waveform compared to a waveform generated by change in posture, fluctuation or the like of the mobile device. The measurement frequency is also extremely high compared to the case of fall detection. For example, when a device falls from 60 cm, the fall time is about 350 ms, and thus the acceleration measurement frequency required to detect the fall is adequate with a relatively long interval of several ms.

A signal processing part that amplifies and A/D-converts the vibration waveform at the time of impact requires appropriate high-speed operation, and the current of the signal processing part inevitably needs to be large to realize the high-speed operation. The problem of the current is extremely important to respond to a demand of thorough recording of unpredictable impacts. That is because monitoring of impacts must be continued even when operation of the system is stopped, and therefore the battery is depleted even with a slight increase in the current or the power consumption.

### SUMMARY OF THE INVENTION

The present invention has been made in view of the situations discussed above, and has an object to provide a dual acceleration sensor system usable for detecting an impact, when a strong impact works on a mobile or portable electronic device or the like, and recording a history of applied impacts, and workable with a low electric power consumption.

The dual acceleration sensor system of the present invention includes a low range acceleration sensor that detects a relatively low acceleration, a high range acceleration sensor that detects a relatively high acceleration, a signal processing circuit that switches and receives the detected signals from the two acceleration sensors to amplify and/or calibrate the detected signals, and an operation mode controller that switches signals between the two acceleration sensors and that switches an operation mode of the signal processing circuit between the low range mode and the high range mode. When the operation mode of the signal processing circuit is in the low range mode, the signal processing circuit receives the detected signal from the low range acceleration sensor, processes at a low-range operation rate, and outputs signal-processed data such as an acceleration signal. Meanwhile, when the signal processing circuit is in the high range mode, the signal processing circuit processes the signal detected from the high range acceleration sensor at a high-range operation rate and outputs the signal-processed data such as an acceleration signal. The operation mode controller switches between the two acceleration sensors and switches an operation mode of the signal processing circuit, with algorithms described below.
(1) Operate in the low range mode first.
(2) Judge whether the magnitude of signal-processed data exceeds a first threshold (Th1) or not, and the low range mode remains if not. The operation mode is switched to the high range mode if it does.
(3) Judge whether the magnitude of signal-processed data in the high range mode is less than a second threshold (Th2) or not, and if it does, update the continuation time of the data continuing to be less than the second threshold and move on to a continuation time judging step. If not, reset the continuation time, and the high range mode remains.
(4) In the continuation time judging step, judge whether the continuation time reaches a predetermined value (T) or not, and if not, the high range mode remains. If it does, reset the continuation time, and the operation mode returns to the low range mode.

The acceleration that the low range acceleration sensor measures is an acceleration applied to a mobile device while carrying or using the mobile device during normal operation, and has a range that allows measurement of an acceleration several times to 10 times of the gravity acceleration (1 g, g is gravity acceleration) as a full scale. Denoting this with plus/minus because the acceleration works in different directions, the low range acceleration sensor has a full scale capable of measuring an acceleration of +/several to 10 g.

The high range acceleration sensor measures an acceleration applied to a mobile device beyond the normal operation, the acceleration generated by an impact by a fall or a crash of the mobile device. Various factors, such as shape of product, material of housing as well as material of the collided object, significantly change the magnitude of the impact. The present invention aims to measure and record the history of an impact and vibration applied to the extent where no external damage can be seen. However, the above influential factors change the extent of the impact applied, and at the maximum, the acceleration can be about three-digits larger than the acceleration applied during normal operation. Because the maximum acceleration applied during normal operation is +/-10 g, the full scale of the high range acceleration sensor is preferably twice or more of the full scale of the low range acceleration sensor and in a range capable of measuring the acceleration of up to +/- 10000 g. However, depending on applications of the present invention, a combination of an optimal value as a full scale of each of the low range acceleration sensor and the high range acceleration sensor and a full scale value can be selected.

The first threshold is a value for judging whether the applied acceleration is within the scale or beyond the scale of the low range acceleration sensor, and the first threshold can be set to the upper limit (absolute value) of the scale range of the low range acceleration sensor. However, when the acceleration applied during normal operation is small, instead of setting the first threshold to the upper limit of the scale range of the low range acceleration sensor, the first threshold is preferably set to 50 to 80% of the upper limit, for example. The first threshold can be determined from the distribution of accelerations applied to the mobile device during normal operation.

The second threshold needs to be larger than first threshold and smaller than the upper limit of the scale range of the high range acceleration sensor. If the second threshold is set as high as the upper limit of the scale range of the high range acceleration sensor, frequent switching of the high rage mode and the low range mode occurs, which may deteriorate the reliability of measurement. Therefore, the second threshold is preferably set to equal to or smaller than half the upper limit of the scale range of the high range acceleration sensor. More preferably, the second threshold is about 1/4 of the upper limit. Still more preferably, the second threshold is about 1/10 of the upper limit.

The predetermined time (value) T needs to be set longer than a time for the vibration to settle, the vibration received by the acceleration sensor from an impact. However, if the predetermined time T is too long, switching to the low range mode after settlement of the vibration is delayed, and the idle time of the low range mode measurement may be long. In addition, this leads to an increase in power consumption. On the other hand, if the predetermined time T is too short, frequent switching of the high range mode and the low range mode occurs. Meanwhile, the cycle of vibration generated by an impact or the like differs depending on shape of product, material of housing, material of the collided object, and the like. Some impact vibrations settle in a short time of 1 ms or 2 ms, while other impact vibrations take several hundred ms to several thousand ms to settle. An example of the longer one is when a mobile device falls and rolls on the floor. The predetermined time (T) is supposedly between 1 to 1000 ms, and preferably, appropriately set to the optimal value depending on the application. In many of the products, the predetermined time (T) is preferably set to about 2 to 20 ms.

In the dual acceleration sensor system of the present invention, the full scale of the low range acceleration sensor is, for example, +/-4 g, while the full scale of the high range acceleration sensor is, for example, +/- 500 g. An example of a case where the first threshold (Th1) is 3 g, the second threshold (Th2) is 50 g, and the predetermined value (T) is 10 ms will now be explained.

In a static state, the magnitude of the acceleration applied to the mobile device is 1 g or less and never exceeds 3 g during normal use or carriage. Therefore, the dual acceleration sensor system of the present invention installed in a mobile device normally operates in the low range mode. However, when a strong impact is applied to the device due to rough handling or a fall, data signal-processed in the low range mode easily exceeds 3 g or the first threshold (Th1), and further, reaches the full scale of the low range mode and saturates. In this case, the mode controller immediately instructs switching to the high range mode. In the high range mode, the detection signal is signal-processed in the high range acceleration sensor with 500 g full scale to output data, and the data is used as desired such as recorded as an impact acceleration value. The acceleration caused by an impact gradually attenuates while vibrating, and once entering into the high range mode, the high range mode remains until the magnitude of the signal-processed data becomes less than 50 g or the second threshold (Th2). The high range mode further remains for a while and returns to the low range mode when the continuation time of the magnitude of the signal-processed data continuing to be less than the second threshold reaches the predetermined value (T), for example 10 ms. After returning to the low range mode, the operation mode control is repeated with similar algorithms.

According to the present invention, an acceleration signal can be generally obtained in which the detected signal of the low range acceleration sensor is processed, and this is usable for application for posture monitoring or fall monitoring of a mobile device. Once an impact is applied, an acceleration signal corresponding to the detected signal of the high range acceleration sensor can be immediately obtained, and this is usable for recording an impact history or the like. When the acceleration vibration caused by impact settles and becomes stable, the dual acceleration sensor system that automatically returns to the operation mode in the normal low range acceleration sensor is realized.

In the dual acceleration sensor system of the present invention, the signal processing circuit preferably operates at a relatively low rate in the low range mode and at a relatively high rate in the high range mode.

The cycle of a vibration wave of the acceleration applied to a mobile device when the mobile device is carried and used during normal use is several ten to several hundred ms, while the cycle of a vibration wave of the acceleration applied to a mobile device when the mobile device is dropped, hits an object, or an object hits the mobile device is often around 1 ms. To correctly acquire these vibration waveforms, the signal processing interval (sampling time interval) needs to be one severalth to one hundredth of the time of the vibration cycle. The signal processing interval is preferably several ms in the low range mode for processing signals of the low range acceleration sensor, and 0.1 ms or less in the high range mode for processing signals of the high range acceleration sensor. Although smaller signal processing interval improves accuracy of the vibration waveform, amount of measured data and power consumption increase. Therefore, it is better to determine the signal processing interval in consideration of these factors. To comparatively express the signal processing intervals of the low range mode and the high range mode, the signal processing interval in the low range mode is referred to as a relatively low rate, while the signal processing interval in the high range mode is referred to as a relatively high rate.

In the dual acceleration sensor system of the present invention, it is preferable that the signal processing circuit includes an A/D converter and a digital signal processing part, and that the A/D converter operates at a relatively low frequency in the low range mode and operates at a relatively high frequency in the high range mode.

Because the signal processing interval is set to several ms in the low range mode and 0.1 ms or less in the high range mode, the processing speed of the A/D converter needs to be equivalent or faster. The inverse of the signal processing interval is the signal processing frequency. As described, since the signal processing interval in the low range mode is referred to as a relatively low rate while the signal processing interval in the high range mode is referred to as a relatively high rate, it can be said that the frequency in the low range mode is relatively low and the frequency in the high range mode is relatively high.

In the dual acceleration sensor system, at lease one of the low range acceleration sensor and the high range acceleration sensor is a three-axis acceleration sensor. The detected signal of each axis of the three-axis acceleration sensor is transmitted to the signal processing circuit after time-shared and multiplexed, and the signal processing circuit can process the detected signal, synchronizing with the time-sharing of the detected signal.

In the dual acceleration sensor system, it is preferable that the low range acceleration sensor, the high range acceleration sensor, a multiplexer that time-shares and multiplies the detected signal of each axis from the three-axis acceleration sensor of the low range acceleration sensor and the high range acceleration sensor, and a means for switching signals that switches the detected signal between the acceleration sensors and transmits to the signal processing circuit are formed on a single acceleration sensor chip. It is also preferable that the signal processing circuit and the operation mode controller are formed on an IC chip.

In the dual acceleration sensor system of the present invention, because the operation mode of the signal processing circuit can be switched between the low range mode and the high range mode, switching to the high range mode to increase the signal processing speed enables more accurate acquisition of a high-speed impact acceleration waveform. To increase the signal processing speed, the power consumption of the amplifier needs to be increased to increase the bandwidth in the analog circuit. In the digital circuit, the power consumption generally increases as sampling of the signal becomes faster. However, according to the present invention, sampling becomes faster only when there is an impact, and therefore the hour rate is low, allowing lower average power consumption.

### BRIEF DESCRIPTION OF THE DRAWINGS

Fig. 1 is a block diagram for explaining a dual acceleration sensor system of EXAMPLE 1 according to the present invention.

Fig. 2 shows an operation mode controlling flow chart for the dual acceleration sensor system of EXAMPLE 1 of the present invention.

Fig. 3 is a block diagram for explaining a dual acceleration sensor system of EXAMPLE 2 according to the present invention.

Fig. 4 is a block diagram for explaining a dual acceleration sensor system of EXAMPLE 3 according to the present invention.

Fig. 5 is a block diagram for explaining a dual acceleration sensor system of EXAMPLE 4 according to the present invention.

### DETAILED DESCRIPTION OF THE PREFERRED EMBODIMENTS

Based on EXAMPLES, the present invention will be described in detail below.

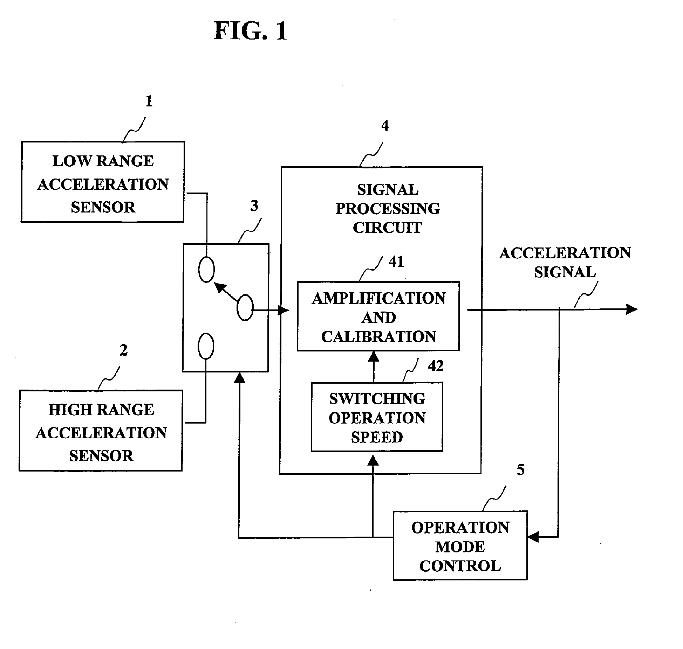

A dual acceleration sensor system of EXAMPLE 1 of the present invention is shown with a block diagram in Fig. 1. The dual acceleration sensor system of Fig. 1 includes a low range acceleration sensor 1 in charge of a relatively low acceleration region, a high range acceleration sensor 2 in charge of a relatively high acceleration region, a means for switching signals 3 for switching signals detected from the two acceleration sensors, a signal processing circuit 4 having a signal processing part 41 that conducts amplification and/or calibration and an operation speed switching part 42, and an operation mode controller 5 that switches the means for switching signals 3 and an operation mode of the signal processing circuit 4 between the two acceleration sensors. The signal processing circuit 4 processes signals detected from the two acceleration sensors 1 and 2 and outputs an acceleration signal.

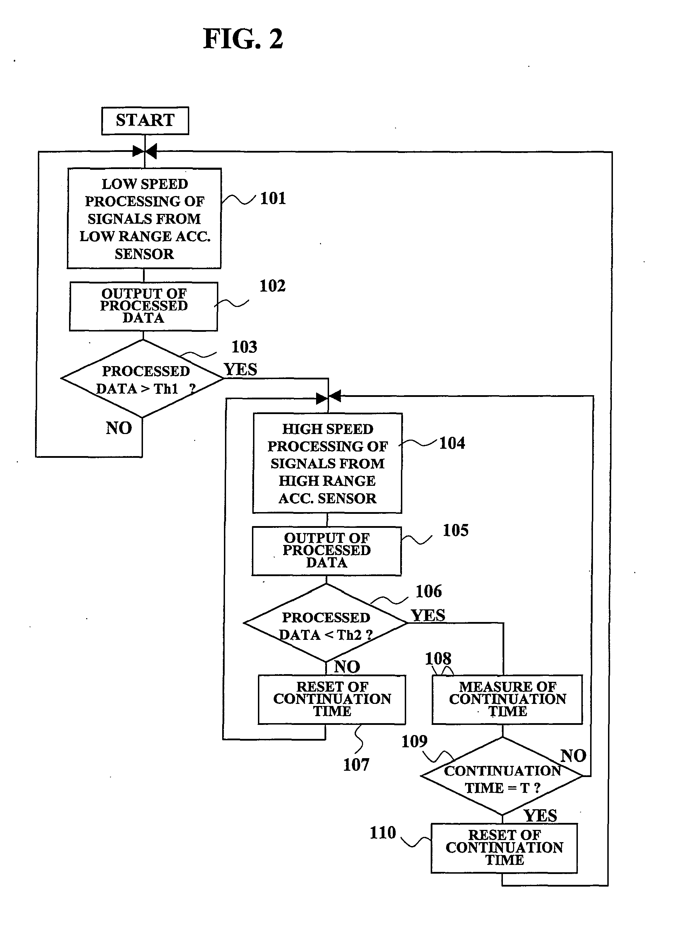

An operation mode controlling flow chart of EXAMPLE 1 of the present invention is shown in Fig. 2. Responding to powering on of the system or an operation start instruction, the signal processing circuit 4 first processes signals detected from the low range acceleration sensor 1 at a low rate in a low range mode (Step 101), outputs the processed data (Step 102), and then judges whether or not the processed data or an acceleration signal exceeds a first threshold (Th1) (Step 103). If the result of the judgment is no, the process returns to Step 101. If the result of the judgment is yes, the operation mode switches to a high range mode. In the high range mode, the signal processing circuit 4 first processes signals detected from the high range acceleration sensor 2 at a high rate (Step 104), outputs the processed data (Step 105), and then judges whether or not the magnitude of the processed data is less than a second threshold (Th2) (Step 106). If the result of the judgment is yes, a continuation time is updated (Step 108), and the process moves on to a continuation time judging step (Step 109). If the result of the judgment of Step 106 is no, the continuation time is reset (Step 107), and the process returns to Step 104 and the high range mode remains.

In the continuation time judging step (Step 109), whether or not the continuation time has reached a predetermined value (T) is judged, and the process returns to Step 104 and the high range mode remains if not, while the continuation time is reset (Step 110) and the operation mode returns to the low range mode if it does. Among the above processing steps, Steps 101 to 103 are executed in the low range mode, and Steps 104 to 110 are executed in the high range mode.

Full scales of the low range acceleration sensor 1 and the high range acceleration sensor 2 of this EXAMPLE are +/-4 g and +/-500 g respectively. In this EXAMPLE, the first threshold is set to 3 g which is within the full scale of the low range acceleration sensor, while the second threshold is set to 50 g, with 10% of the full scale of the high range acceleration sensor as a standard. In relation to the predetermined value (T) for judging the continuation time in which the acceleration signal continues to be less than the second threshold, ifT is long, returning to the low range mode is delayed after the impact has settled, and if T is too short, switching of the high range mode and the low range mode back and forth is repeated during the impact settlement. In consideration of these factors, about 10 ms is a standard when designing.

According to this EXAMPLE, an acceleration signal can be generally obtained in which the detected signal of the low range acceleration sensor is processed, and this is usable for application for posture monitoring or fall monitoring of a mobile device. Once an impact is applied, an acceleration signal corresponding to the detected signal of the high range acceleration sensor can be immediately obtained, and this is usable for recording an impact history or the like. When the acceleration vibration caused by impact settles and becomes stable, the dual acceleration sensor system that automatically returns to the operation mode in the normal low range acceleration sensor is realized.

The dual acceleration sensor system of this EXAMPLE includes the low range mode and the high range mode, and thus the operation rate of the signal processing circuit can be switched between these modes. In addition, because the signal processing rate is high in the high range mode, a high-speed impact acceleration waveform can be acquired more accurately. To increase the speed of the signal processing in the analog circuit, the power consumption of the amplifier had to be increased to increase the bandwidth. Furthermore, the power consumption in the digital circuit generally increases as sampling of the signal becomes faster. However, according to this EXAMPLE, sampling needs to be faster only when there is an impact, and therefore the hour rate is low, allowing lower average power consumption.

### EXAMPLE 2

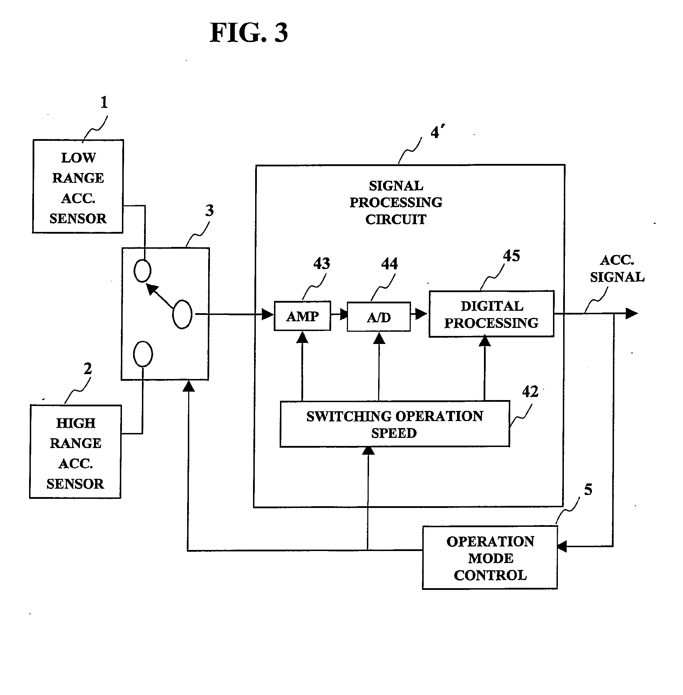

The dual acceleration sensor system of EXAMPLE 2 of the present invention is shown with a block diagram in Fig. 3. The difference from EXAMPLE 1 is that a signal processing circuit 4' of the dual acceleration sensor system of EXAMPLE 2 employs a digital system. A detected signal inputted to the signal processing circuit 4' is analog-amplified by an amplifying circuit 43, converted to a digital signal by an A/D converter 44, and then processing of signal such as calibration is conducted by the digital signal processing part 45. The operation speed switching part 42 switches the conversion cycle (i.e., sampling frequency) of A/D conversion as the mode controller 5 switches and controls the low range mode and the high range mode.

The sampling frequency in the high range mode is increased to several times that in the low range mode, and if needed, the process clock of the digital signal processing part 45 is speeded up or the bandwidth of the amplifying circuit 43 is increased. This allows acquisition of a high-speed impact waveform in the high range mode. Although the power consumption in the high range mode increases as the high range mode is speeded up, the average power consumption does not increase significantly because the hour rate of the high range mode is low, as described. The operation mode control algorithms conducted by the operation mode controller 5 are basically the same as in EXAMPLE 1.

### EXAMPLE 3

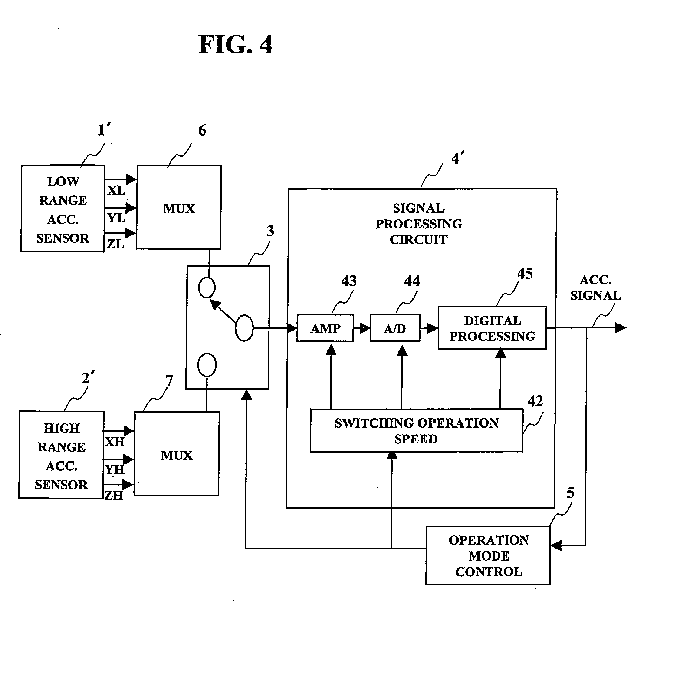

Although the present invention can be applied regardless of the number of axes of the acceleration sensor, the dual acceleration sensor system of the present invention particularly applied to a three-axis acceleration sensor is shown with a block diagram in Fig. 4 as EXAMPLE 3 of the present invention. Multiplexers 6 and 7 of the dual acceleration sensor system of Fig. 4 time-share and output X-axis, Y-axis, and Z-axis detected signals of each of a low range three-axis acceleration sensor 1' and a high range three-axis acceleration sensor 2'. The A/D converter 44 and the digital signal processing part 45 of a signal processing circuit 4' synchronize with the X-axis, Y-axis, and Z-axis detected signals of the multiplexers 6 and 7 and operate three times faster than in the case of one axis, and thus the power consumption increases accordingly. More benefits of reducing the power consumption can be obtained according to the present invention.

One of the low range acceleration sensor and the high range acceleration sensor may be one-axis or two-axis. In addition, the multiplexers are applicable to the analog system described in EXAMPLE 1.

### EXAMPLE 4

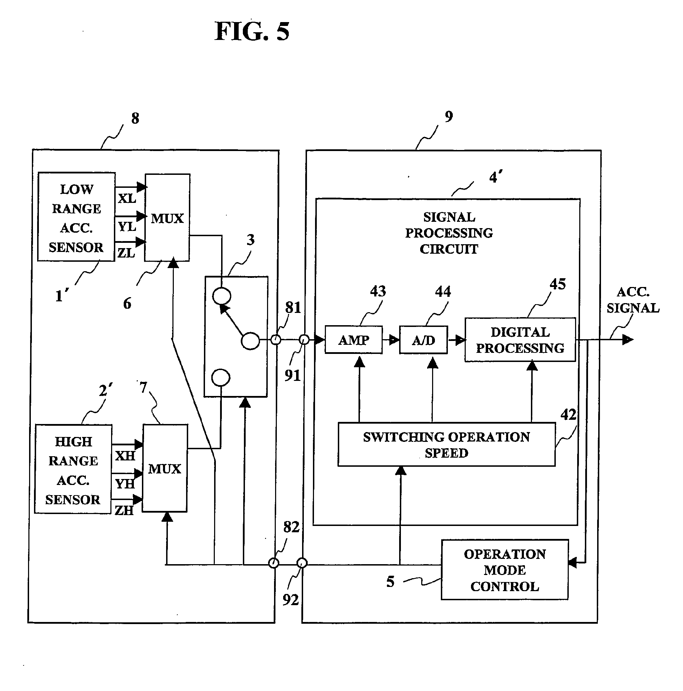

The dual acceleration sensor system of EXAMPLE 4 of the present invention is shown with a block diagram in Fig. 5. In Fig. 5, reference numeral 8 denotes an acceleration sensor chip, and reference numeral 9 denotes an IC chip. The low range three-axis acceleration sensor 1' and the high range three-axis acceleration sensor 2' are MEMS (Micro-Electro-Mechanical Systems) processed and formed on a common silicon substrate. Additionally, the multiplexers 6 and 7 and the means for switching signals (switch) 3 are integrated on the same silicon substrate. The signal processing circuit 4' and the operation mode controller 5 are formed on the IC chip 9. Terminals 81 and 91 for connecting the sensor detected signal between the acceleration sensor chip 8 and the IC chip 9, and terminals 82 and 92 for supplying sensor switching and a pulse signal for multiplexer control from the IC chip 9 to the acceleration sensor chip 8 are illustrated.

Fig. 5 shows that there is one terminal each for the terminals 81, 82, 91, and 92, but actually, the sensor detected signal requires at least two terminals for differential signals and at least three terminals for pulse signals for sensor switching and multiplexer control. Usually, in addition to these, a power source and a ground connection terminal are required. Therefore, the configuration of this EXAMPLE should include at least seven terminals on each chip for connection between the acceleration sensor chip 8 and the IC chip 9. On the other hand, when only the detection unit is formed on the acceleration sensor chip, at least fourteen terminals are required. This shows how big the terminal reduction effect of this EXAMPLE is.

Even if the multiplexers are integrated on the acceleration sensor chip, when the present invention is not applied in which the low range mode and the high range mode are appropriately switched, four terminals for the sensor signals, four terminals for multiplexer control, and two terminals for a power source and a ground are required, which is ten terminals total for each chip. Therefore, the terminal reduction effect of this EXAMPLE is obtained from the present invention.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A dual acceleration sensor system comprising:
a low range acceleration sensor (1) that detects a relatively low acceleration;
a high range acceleration sensor (2) that detects a relatively high acceleration;
a signal processing circuit (4) that operates in a low range mode, in which the signal processing circuit (4) processes signals detected by the low range acceleration sensor (1) in an operation rate for a low range, and in a high range mode, in which the signal processing circuit (4) processes signals detected by the high range acceleration sensor (2) in an operation rate for a high range; and
an operation mode controller (5) that switches signals which the signal processing circuit (4) processes between the two acceleration sensors and an operation mode between the low range mode and the high range mode;
wherein it is judged in the low range mode whether signal-processed data exceeds a first threshold or not, and the low range mode remains if not, while the operation mode is switched to the high range mode if it does, and
when a signal-processed data in the high range mode continues less than a second threshold for a predetermined period of time, the operation mode returns to the low range mode, while the high range mode remains, if a period that the signal-processed data is less than the second threshold does not reach the predetermined period of time.

2. A dual acceleration sensor system according to claim 1, wherein the signal processing circuit (4) operates at a relatively low rate in the low range mode, while the signal processing circuit (4) operates at a relatively high rate in the high range mode.

3. A dual acceleration sensor system according to claim 1 or 2, wherein the signal processing circuit (4) comprises an A/D converter (44) and a digital signal processing part (45), the AID converter (44) operating at a relatively low frequency in the low range mode, and at a relatively high frequency in the high range mode.

4. A dual acceleration sensor system according to at least one of claims 1 to 3, wherein at least one of the low range acceleration sensor (1) and the high range acceleration sensor (2) is a three-axis acceleration sensor, signal detected by the three-axis acceleration sensor is transmitted to the signal processing circuit (4') after time-shared and multiplexed, and the signal processing circuit (4') processes the detected signal, synchronizing with the time-sharing of the detected signal.

5. A dual acceleration sensor system according to at least one of claims 1 to 4, wherein the low range acceleration sensor (1), the high range acceleration sensor (2), a multiplexer (6, 7) that time-shares and multiplies the detected signal of each axis from the three-axis acceleration sensor of the low range acceleration sensor (1) and the high range acceleration sensor (2), and a means for switching signals (3) that switches the detected signal between the two acceleration sensors and transmits to the signal processing circuit (4') are formed on a single acceleration sensor chip, and the signal processing circuit (4') and the operation mode controller (5) are formed on an IC chip (9).

6. A dual acceleration sensor system according to at least one of claims 1 to 3, wherein at least one of the low range acceleration sensor (1) and the high range acceleration sensor (2) is a three-axis acceleration sensor, signal detected by the three-axis acceleration sensor is transmitted to the signal processing circuit (4') after time-shared and multiplexed, and the signal processing circuit (4') processes the detected signal, synchronizing with the time-sharing of the detected signal.

7. A dual acceleration sensor system according to at least one of claims 1 to 3, 6, wherein the low range acceleration sensor (1), the high range acceleration sensor (2), a multiplexer (6, 7) that time-shares and multiplies the detected signal of each axis from the three-axis acceleration sensor of the low range acceleration sensor (1) and the high range acceleration sensor (2), and a means for switching signals (3) that switches the detected signal between the two acceleration sensors and transmits to the signal processing circuit (4') are formed on a single acceleration sensor chip, and the signal processing circuit (4') and the operation mode controller (5) are formed on an IC chip (9).
